**Europäisches Patentamt**

**European Patent Office**

**Office européen des brevets**

(19)

(11) Veröffentlichungsnummer : **0 166 902**
**B1**

(12)

# EUROPÄISCHE PATENTSCHRIFT

(45) Veröffentlichungstag der Patentschrift :
04.05.88

(51) Int. Cl.⁴ : **H 04 N   3/18**

(21) Anmeldenummer : **85105324.9**

(22) Anmeldetag : **02.05.85**

(54) Leistungssparende Treiberstufe für stand-by-Betrieb eines Fernsehgerätes.

(30) Priorität : **05.06.84 DE 3420866**

(43) Veröffentlichungstag der Anmeldung :
**08.01.86 Patentblatt 86/02**

(45) Bekanntmachung des Hinweises auf die Patenterteilung : **04.05.88 Patentblatt 88/18**

(84) Benannte Vertragsstaaten :
**AT CH DE FR GB IT LI NL SE**

(56) Entgegenhaltungen :
**US-A- 4 112 465**
**US-A- 4 127 875**

(73) Patentinhaber : **Deutsche Thomson-Brandt GmbH**
**Hermann-Schwer-Strasse 3 Postfach 2060**
**D-7730 Villingen-Schwenningen (DE)**

(72) Erfinder : **Ohnemus, Fritz, Dipl.-Ing.**
**An der Hammerhalde 13**
**D-7730 Villingen-Schwenningen (DE)**

EP 0 166 902 B1

## Beschreibung

Die Erfindung betrifft eine Schaltungsanordnung gemäß dem Oberbegriff des Anspruchs.

Schaltnetzteile und/oder Zeilenendstufen werden oft von einem Treiber in transformatorischer Kopplung angesteuert. Diese Schaltung ermöglicht Leistungsanpassung, d. h. guten Wirkungsgrad, sowie eine galvanische Trennung zwischen Endstufe und Empfängerschaltung. Da ein modernes Fernsehgerät Anschlußmöglichkeiten für verschiedene Zusatzgeräte bieten soll, ist aus Sicherheitsgründen eine solche galvanische Trennung zwischen Gerät und Stromnetz erforderlich. Eine optimale Stabilisierung der erzeugten Betriebsspannungen erhält man, wenn eine Regelinformation von einer erzeugten Gleichspannung abgenommen und der Regelschaltung zugeführt wird. Dies bedeutet, daß nur die Leistungsstufe auf Netzpotential liegt und die galvanische Trennung der Geräteschaltung vom Netz über Transformatoren erfolgt. Die meisten Geräte können mit einer drahtlosen Fernbedienung ausgestattet werden. Im allgemeinen wird dafür Infrarotlicht verwendet. Im stand-by-Zustand muß diese Schaltung empfangsbereit sein. Die Stromversorgung des IR-Empfängers kann beispielsweise durch einen kleinen Netztransformator mit Gleichrichter erfolgen, wobei diese erzeugte Spannung auch zum Anlaufen der Ozillator- und Treiberstufe benutzt wird. Im Betriebszustand, d. h. nach Einschaltung über die Fernbedienung, wird die Stromversorgung dieser Stufen mittels einer Übernahmediode durch das Leistungsnetzteil, meist ein Schaltnetzteil, geliefert. um den Stromverbrauch des Gerätes wahrend des stand-by-Betriebes zu reduzieren, fließt bei der Treiber- und der Endstufe kein Ruhestrom, d. h. erst ein mit dem Einschalten erzeugtes Ansteuersignal bewirkt einen Stromfluß (B- bzw. C-Betrieb). Die Übertragung dieses Steuersignals vom Treiber zur Endstufe mittels eines Übertragers macht eine Bedämpfung der Wicklung zur Unterdrückung von Ausschwingvorgängen notwendig. Siehe dazu beispielsweise das Schaltbild des SABA ultracolor TV-Gerätes T67S62 (telecommander) Seite 26. Die steilen Schaltflanken stoßen nämlich den Schwingkreis an, der aus der Induktivität und der Kapazität der Wicklung gebildet wird. Diese Widerstandsbedämpfung der Wicklung mit der größten Induktivität und Kapazittät verbraucht ein Vielfaches dessen, was als Steuerleistung an der Basis der Endstufe benötigt wird.

Der Erfindung lag die Aufgabe zugrunde, die Leistungsaufnahme der Treiberstufe eines Fernsehgerätes im stand-by-Betrieb erheblich zu reduzieren ohne den Schaltungsaufwand nennenswert zu erhöhen.

Die Aufgabe wird für den Oberbegriff des Anspruchs erfindungsgemäß gelöst nach seinem Kennzeichen. Weitere Einzelheiten sind der Beschreibung eines Ausführungsbeispiels an hand der Zeichnung zu entnehmen.

Es hat sich gezeigt, daß während des stand-by-Betriebs oder der Anlaufzeit die genannte Bedämpfung wesentlich verringert werden kann und so der Leistungsverbrauch der Treiberstufe erheblich reduziert sein kann. Erst bei Einschalten mittels der Fernbedienung und dann beginnender Übernahme der Stromversorgung durch die Übernahmediode wird die optimale Bedämpfung benötigt. Das aus einem Widerstand und einem Kondensator bestehende Dämpfungsglied wird nach der Erfindung durch die Übernahmediode hinzugeschaltet. Vorteilhafterweise erfordert eine derartige Umschaltung und Schaltungsänderung nur einen zusätzlichen Widerstand da die Übernahmediode die gewünschte Funktion mit ausführen kann.

Nachfolgend wird die Erfindung unter Bezug auf die Zeichnung beschrieben, diese zeigt in

Figur 1 eine bekannte, beispielhafte vereinfachte Schaltung, wobei das Dämpfungsglied bei stand-by-Betrieb wie auch bei normalem Betrieb parallel zur Primärwicklung des Trenntransformators angeschlossen ist ;

Figur 2 ein Ausführungsbeispiel der erfindungsgemäßen Schaltungsanordnung, wobei das Dämpfungsglied über die Übernahmediode hinzugeschaltet wird.

In den beiden Figuren sind gleiche oder entsprechende Positionen mit denselben Bezugszahlen versehen.

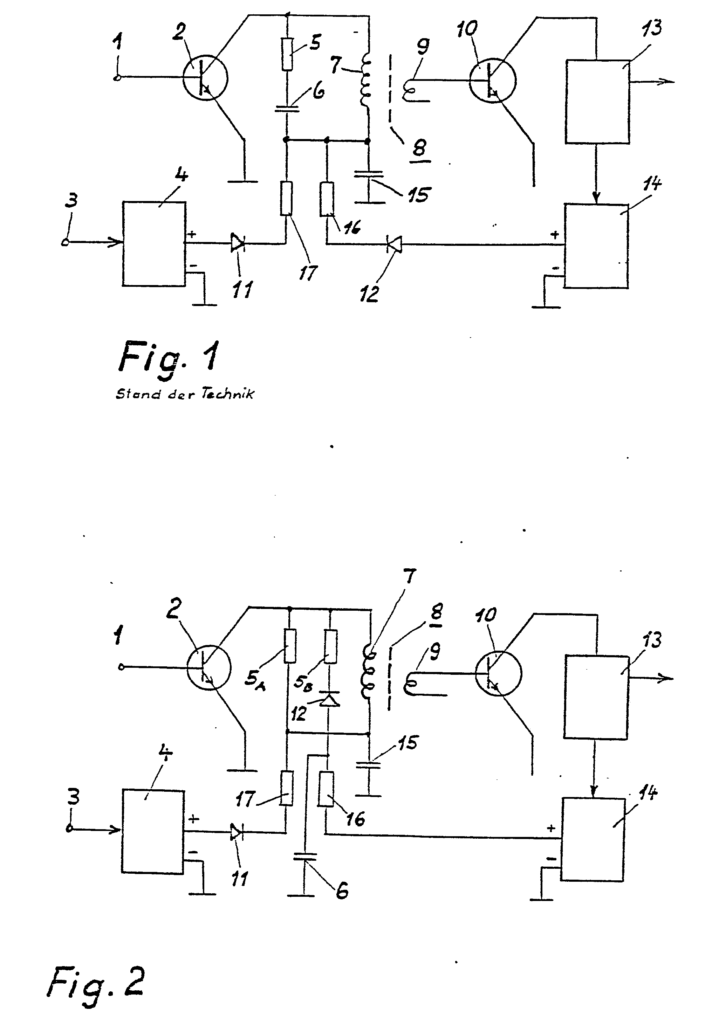

Figur 1 zeigt Treiber- und Endstufe eines fernbedienbaren Fernsehgerätes. Die Basis des Transistor 2 liegt am Steueranschluß 1. Der Kollektor desselben ist mit der Primärwicklung 7 des Trenntransformators 8 verbunden. Ein, Dämpfungsglied bestehend aus Widerstand 5 und Kondensator 6 liegt parallel zu der Primärwicklung 7. Im stand-by-Betrieb sorgt ein kleines Netzteil 4, das am Netzanschluß 3 angeschlossen ist, für die ständige Stromversorgung des Treibers über den Vorwiderstand 17 und die Diode 11. Von der angedeuteten. Sekundärwicklung 9 wird die Endstufe mit dem Transistor 10 über dessen Basis angesteuert. Ein Impulstransformator 13 ist mit dem Kollektor des Transistors 10 verbunden. An angedeuteten Ausgang desselben sind unter anderen übliche Gleichrichterstufen des Gerätes angeschlossen.

Wenn der Betriebszustand des Gerätes eingeschaltet wird, d. h. fernbedientes Ende des stand-by-Betriebes, wird die Stromversorgung mittels der Übernahmediode 12 über dem Vorwiderstand 16 von der Leistungsstufe aus der Spannungsquelle 14 geliefert.

Nach der Erfindung kann die in Figur 1 gezeigte beispielhafte bekannte Schaltung durch das in Figur 2 gezeigte Schaltungsbeispiel dahingehend wesentlich verbessert werden, daß die Stomaufnahme der Treiberstufe im stand-by-Betrieb nur ein Bruchteil der bisherigen ist. Der Widerstand $5_A$ ist im stand-by-Betrieb parallel zur Primärwicklung 7 wirksam. Durch die Übernahmediode 12 wird das Dämpfungsglied, Widerstand $5_B$ und Kondensator 6 bei Einschaltung des Betriebszustandes wirksam. Erst jetzt wird die optimale Bedämpfung erforderlich, dabei ist der Widerstand 5$_A$ erheblich grösser als der Widerstand 5$_B$. Der Stromverbrauch der Treiberstufe aus der Spannungsquelle 4 kann auf diese Weise auf 20 % des Wertes reduziert werden, der in der Schaltung gemäß Figur 1 benötigt wird, bevor die Versorgung aus der Spannungsquelle 14 übernommen wird.

**Patentanspruch**

Schaltungsanordnung für ein Fernsehempfangsgerät, das für stand-by-Betrieb mit einem kleinen Netzteil (4) ausgestattet ist und dessen Schaltnetzteil (13) und/oder Zeilenendstufe (10) von einem Treibertransistor (2) über einen Trenntransformator (8) mit einem Dämpfungsglied bestehend aus einer Reihenschaltung eines Widerstandes 65) und einem Kondensator (6) parallel zur Primärwicklung (7) gesteuert wird bzw. werden, wobei eine Übernahmediode (12) bei Beendigung des stand-by-Betriebs, d. h. bei fernbedientem Einschalten des Gerätes in den Betriebszustand, die dabei benötigte Stromversorgung aus der Leistungsstufe ausführt, dadurch gekennzeichnet, daß das genannte Dämpfungsglied so mit der Übernahmediode (12) verbunden ist, dass es erst bei Einschalten des Gerätes in den Betriebszustand wirksam wird, indem der Widerstand (5B) des Dämpfungsgliedes zwischen der Übernahmediode (12) und dem Kollektor des Treibertransistors (2) und der Kondensator (6) vor der Übernahmediode (12) und nach einem Vorwiderstand (16) nach Masse angeschlossen ist, und daß im stand-by-Betrieb ein sehr viel grösserer Dämpfungswiderstand (5A) parallel zur Primärwicklung (7) des Trenntransformators (8) verbunden ist, der den Stromverbrauch der Treiberstufe (2) in dieser Betriebsart erheblich reduziert.

**Claim**

A circuit configuration for a television set, which for stand-by operation is equipped with a small power pack (4) and whose switching power supply (13) and/or line end stage (10) is/are controlled by a driver transistor (2) across an isolating transformer (8) with an attenuator comprised of a series connection of a resistor (65) and of a capacitor (6) in parallel with the primary winding (7), whereby a take-over diode (12) carries out the requisite power supply from the power stage when the stand-by operation is ended, that is, with remote controlled switching on of the set into the operational stage, characterised in that the said attenuator is connected to the take-over diode (12) in such a way that it only becomes effective when the set is switched on into the operational state, whereby the resistor (5B) of the attenuator is connected between the take-over diode (12) and the collector of the driver transistor (2) and the capacitor (6) before the take-over diode (12) and after a series resistor 16 is connected to earth and that in the stand-by state a very much greater damping resistor (5A) is connected in parallel to the primary winding (7) of the isolating transformer (8), which appreciably diminishes the power consumption of the driver stage (2) in this operational mode.

**Revendication**

Montage pour un récepteur de télévision, qui, pour le fonctionnement en stand-by, est équipé d'un petit élément (4) du réseau et dont le bloc d'alimentation réseau (13) et/ou l'étage final de lignes (10) est ou sont commandés par un transistor d'attaque (2) par l'intermédiaire d'un transformateur séparateur (8) comportant un circuit d'amortissement constitué par un circuit série formé d'une résistance (65) et d'un condensateur (6) et branché en parallèle avec 1, enroulement primaire (7), une diode de transfert (12) assurant, à la fin du fonctionnement en stand-by, c'est-à-dire lors du branchement télécommandé de l'appareil dans son état de fonctionnement, l'alimentation en courant nécessaire à partir de l'étage de puissance, caractérisé en ce que ledit circuit d'amortissement est relié à la diode de transfert (12) de telle sorte que c'est seulement lors du branchement de l'appareil dans son état de fonctionnement, qu'il devient actif, par le fait que la résistance (5B) du circuit d'amortissement située entre la diode de transfert (12) et le collecteur du transistor d'attaque (2), et le condensateur (6) branché en amont de la diode de transfert (12) et en aval d'une résistance additionnelle (16) sont raccordés à la masse et que, pendant le fonctionnement en stand-by, une résistance d'amortissement (5A) possédant une valeur beaucoup plus élevée est reliée en parallèle avec l'enroulement primaire (7) du transformateur (8), cette résistance réduisant fortement la consommation de courant de l'étage (2) dans ce type de fonctionnement.

**Fig. 1**

Stand der Technik

**Fig. 2**